# EUROPÄISCHE PATENTSCHRIFT

(11) **EP 3 338 876 B1**
(45) Veröffentlichungstag und Bekanntmachung des Hinweises auf die Patenterteilung: **01.07.2020**
(21) Anmeldenummer: 18151878.8
(22) Anmeldetag: 29.11.2012
(51) Int. Cl.: B01D 53/22, B01D 71/64, C01B 23/00, B01D 63/08, B01D 63/02, B01D 69/06, B01D 69/08

(54) **VERFAHREN ZUR TRENNUNG VON GASEN MITTELS MEMBRANEN**
METHOD FOR SEPARATING GASES BY MEMBRANES
PROCÉDÉ DE SÉPARATION DE GAZ PAR DES MEMBRANES

(30) Priorität: 27.12.2011 EP 11195776
(43) Veröffentlichungstag der Anmeldung: 27.06.2018
(62) Teilanmeldung aus: 12791499.2
(73) Patentinhaber: Evonik Fibres GmbH, 4861 Schörfling am Attersee (AT)
(72) Erfinder: Balster, Jörg, 4840 Vöcklabruck (AT); Ungerank, Markus, 4320 Perg (AT); Velthoen, Ingrid, 7037 EB Beek (NL)
(74) Vertreter: Evonik Patent Association

(56) Entgegenhaltungen:
- EP-A1- 0 799 634
- WO-A1-2011/009919
- JP-A- 2002 363 114
- JP-A- 2009 242 773
- US-A- 3 256 675
- US-A1- 2002 152 889
- US-B1- 6 168 649

## Beschreibung

Die Erfindung betrifft ein spezielles Verfahren zur Auftrennung von Helium enthaltenden Gasgemischen und zur Herstellung von Helium in hoher Reinheit.

Die Helium Gewinnung von Gasquellen ist energetisch ein sehr aufwendiger Prozess und wird bislang im Wesentlichen mittels kryogener Destillation betrieben.

Zur Vereinfachung dieses Prozesses und zumindest als partieller Ersatz von energieintensiven Verfahrensschritten wie z.B. der kyrogenen Destillation wurde der Einsatz von Membrantechnik vorgeschlagen. So werden z. B. in der US 2005/0217479A1 und dem darin zitierten Stand der Technik verschiedene Beispiele der Aufreinigung von Helium aus Gasströmen mittels Membrantechnologien dargestellt. In dem beschriebenen Prozess können jedoch nur geringe Reinheiten von Helium erzielt werden, zudem ist die Ausbeute sehr schlecht.

Es ist allgemein bekannt, dass mittels Gasseparationsmembranen Gasgemische aufgrund unterschiedlicher Permeabilitäten (= Stoffstrom pro Zeiteinheit, Fläche, Differenzdruck und Schichtdicke) der Einzelgase getrennt werden können. Im Allgemeinen werden zur Herstellung solcher Gasseparationsmembrane Kunststoffe zu Hohlfasern oder Flachmembranen verarbeitet. Die Membrane zeichnen sich durch eine sehr dünne Trennschicht an der Oberfläche der Membran aus, sodass die Permeanz (= Stoffstrom pro Zeiteinheit, Fläche und Differenzdruck) der Membran möglichst groß ist.

Neben neuen Membranmaterialien wurden im Stand der Technik auch verschiedene Verschaltung von Membranen untersucht. Literaturbekannt sind eine Reihe von ein- oder mehrstufigen Membranverschaltungen für die Trennung von Gasen. Beispielhaft seien hier als Literaturstellen genannt: Baker, IndEngChemRes, Natural Gas Processing with Membranes, 47 (2008); Bhide MemSci, Hybrid processes for the removal of acid gases from natural gas, 1998; Hhenar, MemSci Application of Cardo-type polyimide (PI) and polyphenylene oxide (PPO) hollow, 2008; EP 0 603 798; EP 0 695 574; US 5,753,011; EP 1 634 946; EP 0 596 268; US 6,565,626 B1; US 6,168,649 B1 und EP 0 799 634. US 3,256,675 beschreibt in Fig. 2 ein Verfahren, bei dem ein Helium enthaltender Gasstrom als Feedstrom einer ersten Membrantrennstufe zugeführt wird und der Retentatstrom dieser Membrantrennstufe in einer zweiten Membrantrennstufe aufgetrennt wird. Die Permeatströme der ersten und der zweiten Membrantrennstufe werden jeweils komprimiert und als Feed einer dritten Membrantrennstufe zugeführt, in der ein an Helium angereicherter Permeatstrom mit einem HeliumGehalt von 75 % bei einer Abtrennungsrate für Helium von etwa 90 % erhalten wird. Der Retentatstrom der dritten Membrantrennstufe wird in den Feedstrom zur ersten Membrantrennstufe zurückgeführt. Die genannten Verfahren weisen den Nachteil auf, dass sie zum Teil mehrere Rekompressionsschritte umfassen oder dass entweder nur eine hohe Reinheit des Permeatgases oder nur eine hohe Reinheit des Retentatgases erzielt werden kann. Für das gleichzeitige Erzielen von hohen Reinheiten von Permeatgas und Retentatgas, gibt es bislang keine geeigneten Membranverfahren. Auch für die ausschließlich mittels Membranverfahren durchgeführte Aufreinigung von Helium gibt es bislang noch keine zufriedenstellenden Lösungen.

Ausgehend von diesem Stand der Technik bestand die Aufgabe der vorliegenden Erfindung darin ein Verfahren zur Trennung und Aufreinigung von Helium enthaltenden Gasgemischen bereitzustellen, welches die Nachteile der Verfahren des Standes der Technik nicht oder nur in verringertem Maße aufweist. Insbesondere sollen Verfahren bereitgestellt werden, welche gleichzeitig ein Helium enthaltendes Permeatgas sowie ein Retentatgas in hohen Reinheiten liefern kann. In einer weiteren speziellen Aufgabe sollen diese Verfahren von den Invest- und Betriebskosten vorteilhaft sein und / oder eine einfachere Verfahrensführung ermöglichen.

In einer nächsten speziellen Aufgabe soll ein möglichst universell einsetzbares Verfahren zur Aufreinigung von Helium bereitgestellt werden. Insbesondere soll es möglich sein, beliebige Gasströme, unabhängig vom Heliumgehalt, unabhängig von der Zusammensetzung des Gasstroms und unabhängig vom Gehalt der anderen Komponenten im Gasstrom effizient und effektiv aufzutrennen.

Eine weitere spezielle Aufgabe der vorliegenden Erfindung war es die Verluste an Helium im Vergleich zu Rohgasstrom so gering wie möglich zu halten.

Weitere nicht explizit genannte Aufgaben ergeben sich aus dem Gesamtzusammenhang der nachfolgenden Ansprüche, Beschreibung, Beispiele und Abbildungen.

Es wurde nun überraschend gefunden, dass durch das Verfahren nach Anspruch 1 bzw. einem der davon abhängigen Ansprüche reine Ströme von Permeat (Heliumstrom) und Retentat erhalten werden können, ohne dass mehr als ein Kompressor benötigt wird. Die Investitionskosten für die Anlage sind niedrig, sie kommt ohne zusätzliche nachgeschaltete Aufreinigungsverfahren aus. Es gelang somit mit einem reinen Membrantrennverfahren die gestellten Aufgaben zu lösen.

Gegenstand der vorliegenden Erfindung sind daher das in den Ansprüchen beanspruchte sowie in der nachfolgenden Beschreibung und den Beispielen näher erläuterte Verfahren.

Die vorliegende Erfindung wird nachfolgend im Detail beschrieben. Zuvor werden einige wichtige Begriffe definiert.

Der Quotient der Permeanzen zweier Einzelgase ergibt die **Selektivität** der Membran zur Trennung bezüglich der zwei Gase und gibt somit an wie gut die Membran ein Gasgemisch bezüglich der beiden Komponenten auftrennen kann. Als **Permeat** wird der gesamte auf der Niederdruckseite der Membran, Membranmodule oder Membrantrennschritts anfallende Strom bezeichnet.

Als **Permeatgas** wird/werden die jeweils an der Membran, an dem Membranmodul, oder im Membrantrennschritt im **Permeatstrom** gegenüber den jeweiligen Eintrittsstrom angereicherten Komponente/Komponenten bezeichnet.

Als **Retentat** wird der Gesamte auf der Hochdruckseite der Membran, Membranmodule oder Membrantrennschritts anfallende Strom bezeichnet, der nicht durch die Membran hindurch tritt.

Als **Retentatgas** wird/werden die jeweils an der Membran, an dem Membranmodul, oder im Membrantrennschritt im **Retentatstrom** gegenüber den jeweiligen Eintrittsstrom angereicherten Komponente/Komponenten bezeichnet.

**Rohgas** bzw. **Rohgasgemisch** bzw. **Rohgasstrom (17)** bezeichnet ein Gasgemisch aus mindestens zwei Gasen bzw. einen Strom dieses Gasgemisches, das/der mittels des erfindungsgemäßen Verfahrens bzw. der erfindungsgemäßen Vorrichtung aufgetrennt werden soll und das/der als eine Komponente Helium enthält. Der Gehalt an Helium kann in beliebigen Grenzen variieren, beträgt jedoch bevorzugt zwischen 0,01 und 80 Vol%, besonders bevorzugt 0,1 und 20 Vol% und ganz besonders bevorzugt 1 bis 10 Vol. %. Bei dem Rohgasstrom kann es sich um einen unbehandelten Gasstrom, z. B. Nebenprodukt- oder Abgasströme aus Verfahren etc. oder um einen bereits mit einer Erhöhung des Heliumanteils einhergehend aufgearbeiteten Gasstrom, z. B. aus eine kryogenen Destillation handeln. Beispiele für geeignete Gasströme sind Prozessgase bei denen Helium z.B. als Schutzatmosphäre angewandt wird.

**Feedstrom (5)** bezeichnet einen Gasstrom aus Helium und mindestens einer weiteren Komponente, der der Feedstromtrennstufe (1) zugeführt wird. Dieser Strom kann dem Rohgasstrom (17) bzw. dem durch einen Kompressor komprimierten Rohgasstrom entsprechen. Nach Rückführung des zweiten Permeatstroms (9) und/oder des dritten Retentatstroms (10) setzt sich der Feedstrom (5) jedoch aus den Gasen des Rohgasstroms (17), denen des zweiten Permeatstroms (9) und/oder denen des dritten Retentatstroms (10) zusammen. Der Feedstrom (5) wird bevorzugt erzeugt indem die Ströme (9) und (10) entweder beide mit dem unkomprimierten Rohgasstrom (17) oder beide mit dem komprimierten Rohgasstrom oder einer mit dem unkomprimierten und einer mit dem komprimierten Rohgasstrom vermischt werden oder indem die Ströme (9) und/oder (10) im Kompressor mit dem Rohgasstrom (17) vermischt werden. Kombinationen der zuvor beschriebenen Varianten sind von der vorliegenden Erfindung mit umfasst.

**Feedstromtrennstufe (1)** bezeichnet eine Membrantrennstufe zur Auftrennung des Feedstroms (5) in einen ersten, im Vergleich zum Feedstrom (5) bezüglich Helium angereicherten, Permeatstrom (6) und einen ersten, im Vergleich zum Feedstrom (5) bezüglich Helium abgereicherten, Retentatstrom (7).

**Retentattrennstufe (2)** bezeichnet eine Membrantrennstufe, die gleich oder unterschiedlich zur Feedstromtrennstufe (1) aufgebaut sein kann, zur Auftrennung des ersten Retentatstroms (7) in einen zweiten, im Vergleich zum ersten Retentatstrom (7) bezüglich Helium angereicherten, Permeatstrom (9), und einen zweiten, im Vergleich zum ersten Retentatstrom (7) bezüglich Helium abgereicherten, Retentatstrom (8).

**Permeattrennstufe (3)** bezeichnet eine Membrantrennstufe, die gleich oder unterschiedlich zur Feedstromtrennstufe (1) bzw. Retentattrennstufe (2) aufgebaut sein kann, zur Auftrennung des ersten Permeatstroms (6) in einen dritten, im Vergleich zum ersten Permeatstrom (6) bezüglich Helium abgereicherten, Retentatstrom (10), und einen dritten , im Vergleich zum ersten Permeatstrom (6) bezüglich Helium angereicherten Permeatstrom (11).

Anhand der nachfolgend beschriebenen bevorzugten und speziellen Ausführungsformen des erfindungsgemäßen Verfahrens sowie der bevorzugten und besonders geeigneten Ausführungen sowie der Zeichnungen und Beschreibungen der Zeichnungen wird die Erfindung lediglich exemplarisch näher erläutert, d. h. sie ist nicht auf diese Ausführungs- und Anwendungsbeispiele oder auf die jeweiligen Merkmalskombinationen innerhalb einzelner Ausführungsbeispiele beschränkt.

Einzelne Merkmale, die im Zusammenhang mit konkreten Ausführungsbeispielen angeben und/oder dargestellt sind, sind nicht auf diese Ausführungsbeispiele oder die Kombination mit den übrigen Merkmalen dieser Ausführungsbeispiele beschränkt, sondern können im Rahmen der technischen Möglichkeiten, mit jeglichen anderen Varianten, auch wenn sie in den vorliegenden Unterlagen nicht gesondert behandelt sind, kombiniert werden.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

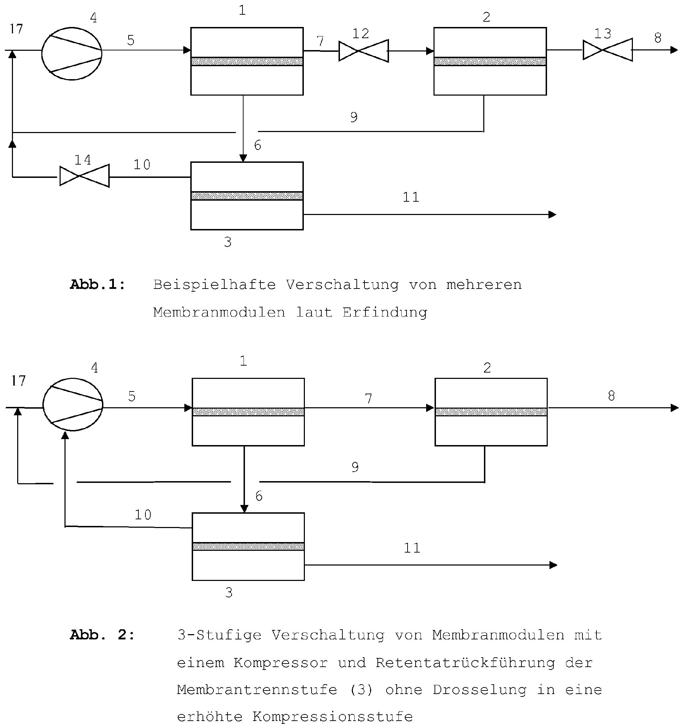

Die für das erfindungsgemäße Verfahren verwendete Vorrichtung, siehe beispielhaft Abbildungen 1 bis 3, beinhaltet eine Verkettung von mindestens drei Membrantrennstufen. Jede Stufe besteht aus einem oder mehreren physikalischen Gasseparationsmodulen, die innerhalb einer Stufe parallel und/oder seriell verschaltet sind. Als Triebkraft für die Gasauftrennung in den Modulen wird eine Partialdruckdifferenz zwischen der Retentat- und der Permeatseite in den jeweiligen Membrantrennstufen erzeugt. Die Partialdruckdifferenz kann entweder mittels eines Kompressors (4), welcher auf der Feedseite der Feedstromtrennstufe (1) angeordnet ist und/ oder mittels zumindest einer, bevorzugt einer oder zwei Vakuumpumpe(n)(in den Abb. 1 bis 3 nicht dargestellt) bevorzugt auf der Permeatseite der Retentattrennstufe (2) im zweiten Permeatstrom (9) und/oder auf der Permeatseite Permeattrennstufe (3) in dritten Permeatstrom (11), erzeugt werden. Ggf. kann es vorteilhaft sein in einer oder mehrerer der Membrantrennstufen die Partialdruckdifferenz durch einen permeatseitigen Spülgasstrom zu erzeugen bzw. zu verstärken.

In einer bevorzugten Ausgestaltungsform der vorliegenden Erfindung bringt ein Kompressor (4) das Rohgasgemisch bzw. das Gasgemisch aus dem Rohgasstrom (17) und dem zweiten Permeatstrom (9) und dem dritten Retentatstrom (10), auf den gewünschten Druck im Bereich von 5 bis 100 bar, vorzugsweise jedoch auf einen Druck von 5 bis 50 bar bzw. besonders bevorzugt 10 bis 25 bar. Der erhaltene Feedstrom (5) wird in die Feedstromtrennstufe (1) eingeleitet. In der Feedstromtrennstufe (1) wird eine Vortrennung des Rohgasgemisches in leichter permeierende Komponenten (Permeatgas) die zu einem großen Teil ins Permeat der ersten Stufe gelangen und weniger schnell permeierende Komponenten (Retentatgas), die von der Membran vorwiegend zurückgehalten und sich im Retentat anreichern, erhalten.

Wenn der Helium Gehalt im Rohgasstrom (17) sehr gering ist und/oder eine hohe Reinheit von Helium im dritten Permeatstrom (11) gewünscht wird, zeichnet sich das erfindungsgemäße Verfahren dadurch aus, dass es derart ausgestaltet ist, dass die Konzentration an Helium im Feedstrom (5)durch die Rückführung des zweiten Permeatstroms (9) und des dritten Retentatstroms (10) erhöht wird, bevorzugt um mindestens 2%, besonders bevorzugt um mindestens 3%, ganz besonders bevorzugt um 4 bis 10% und speziell bevorzugt um 5 bis 10%, jeweils im Vergleich zur Helium-Konzentration im Rohgasstrom (17). Die Erhöhung kann von der Zusammensetzung des Rohgasstromes (17)abhängen und ist besonders ausgeprägt bei niedrigen Konzentrationen an Helium (0,01 bis 10%). In der Regel beträgt die Konzentrationserhöhung von Helium zwischen 2 und 10% besonders bevorzugt zwischen 3 und 5 %, wenn der Gehalt des Permeatgases im Rohgasstrom (17) zwischen 2 und 7% beträgt.

Die Erfinder haben herausgefunden, dass die Ausbeute des gesamten Prozesses an Helium und Retentatgas zunimmt und damit der Gasverlust abnimmt, wenn die Konzentration des Heliums in der Feedstromtrennstufe (1) erhöht wird. Bei gleichem Stufentrennschnitt (=Verhältnis Permeatstrom zu Feedstrom der betrachteten Stufe) gelangt deutlich weniger Helium ins Retentat der Feedstromtrennstufe (1), wenn die Konzentration mindestens des Heliums im Feedstrom (5) erhöht wird. Analog wurde eine Ausbeuteerniedrigung festgestellt, wenn die Konzentration an Helium im aufzureinigenden Feedstrom (5) sich im Vergleich zum Rohgasstrom verringert. So beträgt der Stufentrennschnitt für eine Konzentration von 10% Helium im aufzureinigenden Feedstrom (5) zwischen 2 und 30%, vorzugsweise zwischen 5 und 25% und besonders bevorzugt zwischen 10 und 15 %. In einer besonders bevorzugten Ausführungsform der vorliegenden Erfindung ist das erfindungsgemäße Verfahren daher derart ausgestaltet, dass der Gehalt an Helium im Feedstrom (5) bei größer gleich 2 Vol. %, bevorzugt mehr als 5 Vol.% und ganz besonders bei mehr als 10 Vol. % bezogen auf das Volumen des Feedstroms (5), nach Rückführung des zweiten Permeatstroms (9) und des dritten Retentatstroms (10), liegt.

Durch diese Konzentrationserhöhung von Helium im Feedstrom (5) wird wie bereits erläutert die Effizienz der Feedstromtrennstufe (1) erhöht, was wiederum zur Folge hat, dass weniger Retentatgas in den ersten Permeatstrom (6) gelangt. Dies erhöht wiederum die Effizienz der Permeattrennstufe (3) und sorgt dafür, dass auch hier weniger unerwünschtes Retentatgas in den dritten Permeatstrom (10) gelangt.

Allgemein kann man sagen, dass in der Feedstromtrennstufe (1) bevorzugt 20 bis 100%, besonders bevorzugt 30 bis 90 % und ganz besonders bevorzugt 40 bis 70 % an Helium vom Feedstrom (5) in das Permeat übergehen.

Das Retentat der Feedstromtrennstufe (1) wird, optional mit Druckminderung durch ein optional vorhandenes Druckminderventil (12) oder mit Druckerhöhung, mittels des ersten Retentatstroms (7) der Retentattrennstufe (2) zugeführt, in der die Feinreinigung des Retentatstroms (7) erfolgt. Auf der Retentatseite der Retentattrennstufe (2), d.h. im zweiten Retentatstrom (8), befindet sich bevorzugt ein Druckminderventil (13), mittels dessen der Druck im System aufrecht und konstant gehalten werden kann. Der Gehalt der schwerer permeierenden Komponenten oder eines Retentatgases B wird in der Retentattrennstufe (2) weiter erhöht, sodass der Gehalt an Komponente B oder eines Retentatgases B im zweiten Retentatstrom (8) bevorzugt mehr als 80 Vol. %, besonders bevorzugt mehr als 90 Vol. %, ganz besonders bevorzugt 90 bis 99,9 Vol. % und speziell bevorzugt 92% bis 99,5 Vol. % beträgt. In einer besonders bevorzugten Variante zeichnet sich das erfindungsgemäße Verfahren dadurch aus, dass mindestens 95 Vol. %, bevorzugt mindestens 97 Vol. %, besonders bevorzugt mindestens 99 Vol. % und ganz besonders bevorzugt mindestens 99,5 Vol. %, der mit dem Rohgasstrom (17)in die Vorrichtung eingeführten Retentatkomponente der Feedstromtrennstufe (1) über den zweiten Retentatstrom (8) ausgeschleust werden.

Der Stufentrennschnitt der Retentattrennstufe (2) beträgt bei einer Konzentration des Heliums von 5% im ersten Retentatstrom (7) zwischen 2 und 30%, vorzugsweise zwischen 5 und 15 %.

Das Helium-enthaltende Permeat der Retentattrennstufe (2) wird mittels des zweiten Permeatstroms (9) rückgeführt, dem Feedstrom (5) zugeführt und wiederaufbereitet. Die Rückführung kann - wie zuvor bei der Definition des Begriffes "Feedstrom" bereits erläutert - je nachdem ob ein Kompressor (4) oder gar ein mehrstufiger Kompressor (4) verwendet wird auf unterschiedliche Art und Weise erfolgen. Bei einem einstufigen Kompressor (4) wird der zweite Permeatstrom (9) bevorzugt der Saugseite des Kompressors (4)(siehe Abb. 1) zugeführt. Wird ein mehrstufiger Kompressor verwendet, so ist es bevorzugt, dass der zweite Permeatstrom (9) zwischen zwei Verdichtungsstufen in den Kompressor eingeführt wird (siehe Abb. 2 und 3).

Das mit Helium stark angereicherte Permeat der Feedstromtrennstufe (1) wird mittels des ersten Permeatstroms (6) der Permeattrennstufe (3) zugeführt. Falls notwendig kann mittels eines Druckminderventils (14) im Retentatstrom der Permeattrennstufe (3), d.h. dem dritten Retentatstrom (10), verhindert werden, dass der Druck des Permeats der Feedstromtrennstufe (1) auf Umgebungsdruck abfällt (siehe Abb. 1). Auf diese Weise kann die treibende Kraft für die Permeattrennstufe (3) erhalten bleiben. Die Permeattrennstufe (3) produziert bevorzugt ein Permeat (Helium-Produktstrom) mit einem Gehalt an Helium größer als 50 Vol. %, vorzugsweise 70 bis 99,9 Vol. %, besonders bevorzugt 80 bis 99 Vol. %, speziell bevorzugt 85 bis 98 Vol. % und ganz speziell bevorzugt 90 bis 96 Vol. %, welches über den dritten Permeatstrom (11) aus der Vorrichtung ausgeschleust wird. In einer besonders bevorzugten Ausführungsform ist die erfindungsgemäße Vorrichtung derart ausgestaltet, dass maximal 50 Vol. %, bevorzugt maximal 30 Vol. %, besonders bevorzugt maximal 1 bis 20 Vol. %, ganz besonders bevorzugt maximal 2 bis 15 Vol. % und speziell bevorzugt 4 bis 10 Vol. %, der mit dem Rohgasstrom (17) in die Vorrichtung eingeführten Retentatkomponente der Feedstromtrennstufe (1) über den dritten Permeatstrom (11) ausgeschleust werden. In einer weiteren besonders bevorzugten Variante zeichnet sich das erfindungsgemäße Verfahren somit dadurch aus, dass mindestens 95 Vol. %, bevorzugt mindestens 97 Vol. %, besonders bevorzugt mindestens 99 Vol. % und ganz besonders bevorzugt mindestens 99,5 Vol. %, der mit dem Rohgasstrom (17)in die Vorrichtung eingeführten Heliums der Feedstromtrennstufe (1) über den dritten Permeatstrom (11) ausgeschleust werden.

Der Stufentrennschnitt der Permeattrennstufe (3) beträgt zwischen 30 und 95%, vorzugsweise zwischen 50 und 70%.

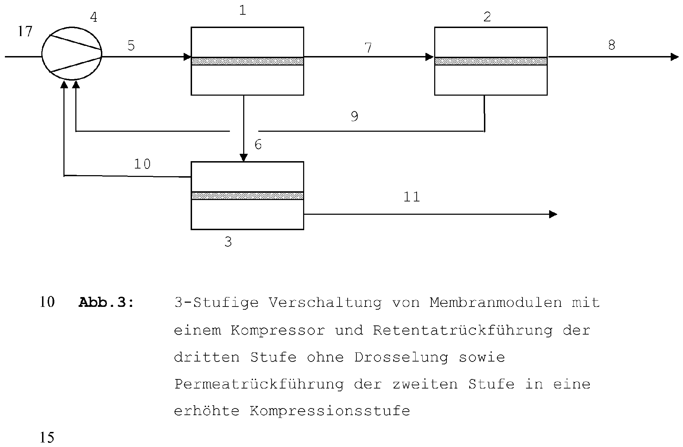

Der dritte Retentatstrom (10) wird rückgeführt, dem Feedstrom (5) zugeführt und wiederaufbereitet. Die Rückführung kann, wie oben bereits erläutert, auf unterschiedliche Weise erfolgen und kann z. B. davon abhängen, ob ein Kompressor (4) oder gar ein mehrstufiger Kompressor (4) verwendet wird. Bei einem einstufigen Kompressor (4) wird der dritte Retentatstrom (10) bevorzugt der Saugseite des Kompressors (4)(siehe Abb. 2) zugeführt. Wird ein mehrstufiger Kompressor verwendet, so ist es bevorzugt, dass der dritte Retentatstrom (10) zwischen zwei Verdichtungsstufen in den Kompressor eingeführt wird (siehe Abb. 2 und 3).

Das erfindungsgemäße Verfahren zeichnet sich dadurch aus, dass es derart ausgestaltet ist, dass das im zweiten Permeatstrom (9) und im dritten Retentatstrom (10) zurückgeführte Gasvolumen in Summe weniger als 50 Vol. %, bevorzugt 5 bis 40 Vol. %, ganz besonders bevorzugt 5 bis 30 Vol. % und speziell bevorzugt 10 bis 25 Vol. % des Volumens des Rohgasstroms (17) beträgt. Die Steuerung der Menge der rückzuführenden Gasströme kann z. B. durch Auswahl der jeweiligen Membranmodule in den Membrantrennstufen (1) bis (3) oder durch Steuerung und Regelung von Drücken im System oder durch die Flüsse erfolgen. Somit zeichnet sich das erfindungsgemäße Verfahren bzw. die Vorrichtung dadurch aus, dass trotz sehr geringer Rückströme die oben näher erläuterte Erhöhung der Konzentration an Helium im Feedstrom (5) sichergestellt wird. Dies erhöht deutlich die Effizienz des gesamten Verfahrens.

Der erste Permeatstrom (6) wird bevorzugt so geführt, dass der Feeddruck der Permeattrennstufe (3), bevorzugt mittels eines Druckminderventils (14) auf der Retentatseite der Permeattrennstufe (3), 1 bis 30 bar, vorzugsweise 2 bis 20 bar und besonders bevorzugt 2 bis 10 bar beträt.

Wie bereits erläutert ist es besonders vorteilhaft wenn ein mehrstufiger Kompressor (4) eingesetzt wird. In diesem Fall kann nämlich auf eine komplette Entspannung des Retentats der Permeattrennstufe (3) verzichtet werden kann, da das Retentat der Permeattrennstufe (3) zwischen zwei Verdichterstufen des Kompressors (4) eingespeist werden kann (siehe Abb. 2 und 3).

Da die Retentattrennstufe (2) bei Entspannung auf Feeddruck im Regelfall im selektivitätslimitierten Druckbereich betrieben werden würde, kann es sinnvoll sein den zweiten Permeatstrom (9) lediglich auf ein höheres Druckniveau einer mehrstufigen Druckerhöhungseinheit, d.h. eines mehrstufigen Kompressors (4) zu entspannen da sich somit die Betriebskosten der Kompressionseinheit reduzieren ohne das Trennergebnis deutlich zu verschlechtern. In einer besonders bevorzugten Ausführungsform der vorliegenden Erfindung wird daher ein mehrstufiger Kompressor (4) verwendet und die Gasströme (9) und (10) diesem Kompressor jeweils zwischen zwei Kompressionsstufen zugeführt. Eine solche Verschaltung zeigt Abb. 3.

Wie bereits erwähnt kann die erfindungsgemäß verwendete Vorrichtung ein oder mehrere Druckminderventile (12), (13) oder (14) umfassen. In einer bevorzugten Ausführungsform wird, bevorzugt mittels eines Druckminderventils (14), sichergestellt, dass der Druckabfall über die Feedstromtrennstufe (1), auf 1 bis 30 bar, vorzugsweise 2 bis 20 bar und besonders vorzugsweise 3 bis 10 bar beschränkt wird. Gleichzeitig oder alternativ wird, bevorzugt mittels eines Druckminderventils (13), sichergestellt, dass der Druckabfall über die Feedstromtrennstufe (1) und die Retentattrennstufe (2), auf 1 bis 100 bar, vorzugsweise 5 bis 80 bar und besonders vorzugsweise 10 bis70 bar beschränkt wird.

Das erfindungsgemäße Verfahren kann im Prinzip mit allen Membranen realisiert werden, die in der Lage sind binäre Gasgemische oder Multigasgemische zu trennen. Als Membranmaterialien kommen bevorzugt aber nicht ausschließlich Kunststoffe zum Einsatz. Als Kunststoffe in der trennaktiven Schicht kommen besonders bevorzugt Polyimide, Polyamide, Polysulfone, Celluloseacetate und Derivate, Polyphenylenoxide, Polysiloxane, Polymere mit intrinsischer Mikroporosität, Mixed Matrix Membranen, Facilitated Transport Membranen, Polyethylenoxide, Polypropylenoxide, Kohlenstoffmembranen oder Zeolithe oder Mischungen daraus in Frage.

In einer besonders bevorzugten Ausführungsform der vorliegenden Erfindung weisen die Gasseparationsmembranmodule eine Gemischtgasselektivität (= Verhältnis des He-angereicherten Stoffstromes zum Heabgereicherten Stoffstrom über die Membran) für Helium/Methan oder für Helium/Stickstoff von mindestens 40, bevorzugt 50 bis 400,besonders bevorzugt 100 bis 350 und ganz besonders bevorzugt 150 bis 300 auf. Für Helium/Methan umfasst die Erfindung zudem noch die speziell bevorzugten Ausführungsformen mit Gemischtgasselektivitäten von 200 bis 350 und ganz speziell bevorzugt von 250 bis 300. Diese hoch selektiven Membranen haben den Vorteil, dass die Trennung effektiver wird und weniger Permeat aus der Retentattrennstufe (2) bzw. weniger Retentat aus der Permeattrennstufe (3) rückgeführt werden muss. Ihr Einsatz ist daher eine gute Möglichkeit die erfindungsgemäßen Rückströme zu regeln. Ferner muss bei ihrem Einsatz und bei Verwendung eines einstufigen Kompressors (4) weniger Gas doppelt komprimiert werden, was wirtschaftliche Vorteile beim Betrieb der Anlage mit sich bringt. Bei diesen sehr selektiven Membranmodulen müssen nur bis zu 30 %, bevorzugt bis zu 20%, besonders bevorzugt bis zu ca. 10% des als Rohgas in die Feedstromtrennstufe (1) eingebrachten Gases doppelt komprimiert werden, mit einem Membranmodul mit einer Selektivität von nur 40 und ohne andere Regelungsmaßnahmen kann es sein, dass die Doppelkomprimierung bis zu 50% beträgt. Bei Membranen mit einer Mischgasselektivität unter 40 ist eine Aufkonzentrierung auf über 50% Helium im Produktgas mit dem Angegebenen Helium Gehaltsbereich des Rohgas kaum möglich. Die obigen Angaben beziehen sich auf Versuche, bei denen ein Gasgemisches mit 0,4 bis 7% Helium und einer zweiten Komponente B (= Feed) aufgegeben wurden, wobei mehr als 99% Komponente B im Retentatgas der Stufe(2) und mehr als 50% an Helium im Permeatstrom der Stufe (3) enthalten waren.

Der Einsatz solcher hoch selektiven Membrane ist somit eine bevorzugte Möglichkeit, den erfindungsgemäßen Prozess wesentlich wirtschaftlicher zu führen und die notwendigen Größe des Kompressors und die benötigten Energie zu reduzieren.

Besonders bevorzugte Membranen weisen als Materialien für die trennaktive Schicht bzw. als Material für die komplette Membran ein Polyimid der allgemeinen Formel 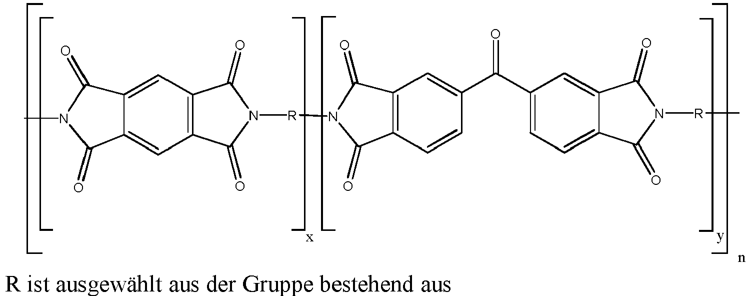 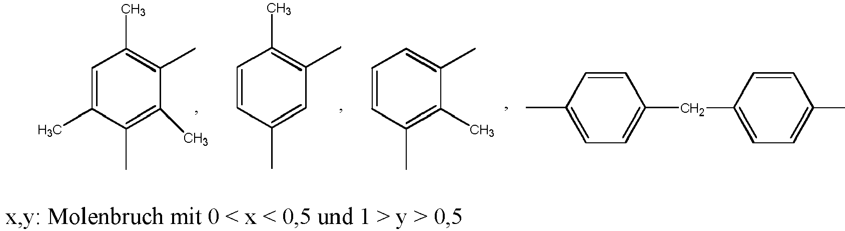 auf.

Ganz besonders bevorzugte Membranen umfassen als Material für die trennaktive Schicht der Membranen ein Polyimid umfassend 10 bis 90 Gew. %, bevorzugt 15 bis 25 Gew.% und ganz besonders bevorzugt 20 Gew. % 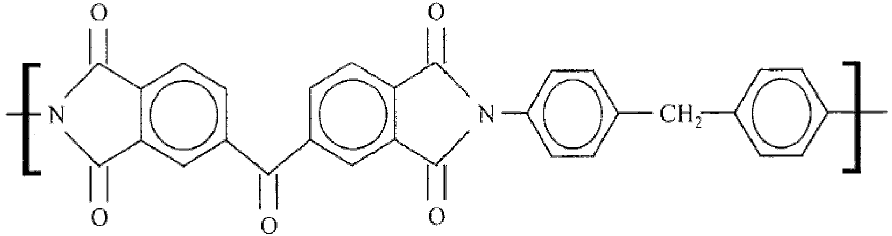 sowie 90 bis 10 Gew. %, bevorzugt 85 bis 75 Gew.% und ganz besonders bevorzugt 80 Gew. %

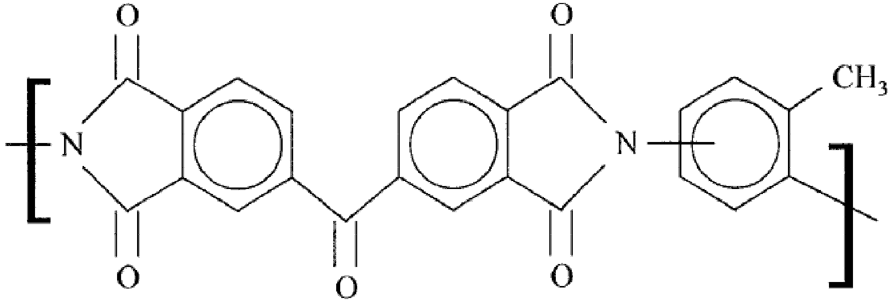

Besonders bevorzugte Polyimide sind in Chemical Abstracts registriert unter den Nummern: CAS Nr. 9046-51-9 und CAS Nr. 134119-41-8.

Die Herstellung solcher Membranen wird in der US 2006/0196355 sowie in der WO 2011/009919 beschrieben. Besonders bevorzugt sind die Membranen gemäß WO 2011/009919, welche gegenüber den Membranen aus der US 2006/0196355 neben der einfacheren und kostengünstigeren Herstellung den Vorteil aufweisen, dass sie eine verbesserte Beständigkeit im erfindungsgemäßen Verfahren aufweisen. Sie weisen insbesondere eine bessere thermische Beständigkeit auf.

Besonders bevorzugte Membranen sind von der Firma Evonik Fibres GmbH unter dem Namen Polyimid P84 und ganz besonders als Polyimid P84 HT erhältlich.

Die Membranen werden erfindungsgemäß bevorzugt in Form von Hohlfasermembranen und / oder Flachmembranen verwendet. Die Membranen werden zu Modulen verbaut, die dann in der Trennaufgabe zum Einsatz kommen. Als Module können alle in der Technik bekannten Gasseparationsmodule wie zum Beispiel aber nicht ausschließlich Hohlfasergasseparationsmodule, Spiralwickelgasseparationsmodule, Kissengasseparationsmodule oder Rohrbündelgasseparationsmodule zum Einsatz kommen.

Das erfindungsgemäße Verfahren hat insbesondere die Vorteile, dass es ein reines Membranverfahren ist.

Weiterhin kann mit dem erfindungsgemäßen Verfahren gleichzeitig ein reiner Retentatstrom (8) und ein reiner Permeatstrom (11) hergestellt werden.

Ein weiterer Vorteil ist darin zu sehen, dass das erfindungsgemäße Verfahren mit deutlich geringerem apparativem und energetischen Aufwand auskommt wie die bekannten Verfahren des Standes der Technik.

Insbesondere durch die Kombination der erfindungsgemäßen Merkmale Steuerung der Menge der rückgeführten Retentatströme und Erhöhung der Permeatkomponente im Feedstrom (5), sowie in den besonders bevorzugten Ausführungsformen des Merkmals Gemischtgasselektivität, kann ein Verfahren zur Verfügung gestellt werden, welches den Verfahren des Standes der Technik deutlich überlegen ist.

Wie zuvor beschrieben kann das erfindungsgemäße Verfahren eingesetzt werden um hochreine Heliumströme zu erhalten. Grundsätzlich kann das Verfahren aber auch benutzt werden um "Roh-Helium" herzustellen. Als "Roh-Helium" bezeichnet man Helium mit einer Reinheit von 50 bis 70 Vol. % Helium, welches einer anderweitigen Weiterverarbeitung oder Aufreinigung zugeführt werden kann. Das erfindungsgemäße Verfahren kann somit herkömmlicher Heliumaufarbeitungsanlegen vollständig ersetzen. Es kann aber auch nur Teile bzw. Teilschritte ersetzen. Es erlaubt somit größtmögliche Flexibilität.

Ein konventionelles Heliumaufarbeitungsverfahren aus Gasgemischen, besteht z. B. aus den Schritten:
a) Entfernung von CO₂, z. B. durch Aminabsorption
b) Trocknung, z.B. über Molekularsieb
c) Kohlenwasserstoffentfernung, z.B. über Aktivkohle
d) Heliumaufkonzentration, z. B. über fraktionierte Destillation
man erhält ein "Roh-Helium" mit einer Reinheit von 50 bis 70 Vol. %
e) N₂ und CH₄-Abtrennung, z.B. durch Abkühlung auf -193°C
f) Kat. Umwandlung von H₂ in H₂O
g) ggf. weitere Aufarbeitungsschritte

Man erhält Helium mit einer Reinheit bis zu 99,99 Vol. %.

Das erfindungsgemäße Verfahren kann hier insbesondere die Schritte d) und/oder e) aber auch weitere der genannten Schritte ersetzen.

Meßmethoden:
Zur Bestimmung der Gemischtgasselektivität He/CH₄ oder He/N₂ werden Membranmodule mit einer Mischung von 50% He und 50% N₂ bzw. 50% He und 50% CH₄ bei Raumtemperatur (23°C) im Feed betrieben. Die Zusammensetzung des Permeates und des Retentates werden hierbei bei verschiedenen Drücken (5, 10, 15, 20 bar(g) gemessen. Aus diesen Messungen lassen sich dann die Permeanzen des He und des N₂ bzw. CH₄ für den gesamten gemessenen Druckbereich (5 bis 20 bar) berechnen.

Das Verhältnis dieser Permeanzen entspricht dann der Gemischtgasselektivität.

Die nachfolgenden Beispiele sollen die vorliegende Erfindung näher erläutern und beschreiben, schränken diese jedoch in keiner Weise ein.

### Beispiele

### Allgemeine Vorbemerkung

Die nachfolgenden Beispiele basieren auf Simmulationsrechnungen. Basis sind Membranmodule umfassend 619 Hohlfasermembrabnen aus P84HT. Die reale Gemischtgasselektivität beträgt He/N₂ = 175 und He/CH₄ = 290. Für die Simulationsrechnungen wurden jedoch nur folgende Gemischtgasselektivitäten zu Grunde gelegt: He/N₂ = 150 und He/CH₄ = 250.

Für die Simulationsrechnungen wurde davon ausgegangen, dass die in Abb. 1 dargestellte Verschaltung verwendet wird. Jede Membrantrennstufe besteht aus den o.g. Modulen.

1 m³/h eines Rohgasgemisches mit der in den Beispielen angegebenen Zusammensetzung wird in eine Mischkammer eingebracht und dann zusammen mit rückgeführtem Gas aus den Gasströmen (9) und (10) auf den in den Beispielen angegebenen Druck komprimiert. Das komprimierte und auf 20°C gekühlte Gas wird auf die Feedstromtrennstufe (1) aufgebracht. Das Retentat dieser Stufe wird mittels des ersten Retentatstroms (7) der Retentattrennstufe (2) zugeführt. Ein Reduzierventil (13) auf der Retentatseite der Retentattrennstufe (2) bestimmt die treibende Kraft durch die Membran der Membrantrennstufen (1) und (2). Der Druckabfall über die Membran der Stufe (1) erfolgt nicht bis zum Umgebungsdruck sondern wird durch ein Reduzierventil (14) auf der Retentatseite der Permeattrennstufe (3) auf den in den Beispielen angegebenen Druck beschränkt. Die Summe an rückgeführten Gasströmen (9) und (10) wird in den nachfolgenden Beispielen angegeben.

### Erfindungsgemäßes Beispiel 1: Herstellung von "Roh-Helium"

Als Rohgasstrom wird in einem Mischer eine Mischung aus
0,4 Vol% He
16,1 Vol. % N₂
83,5 Vol. % CH₄
hergestellt.

Die Summe der rückgeführten Stoffströme (9) und (10) betrug 14 Vol.- %. Der Feeddruck betrug 20 bar(a). Die Heliumausbeute bezogen auf die eingesetzte Heliummenge betrug > 97 Gew.%. Weitere Zusammensetzungen und Drücke der erhaltenen Gasströme finden sich in nachfolgender Tabelle 1.

**Tabelle 1:**

| | He [Vol.%] | N₂ [Vol.%] | CH₄ [Vol.%] | Druck p [bar(a)] |
|---|---|---|---|---|
| Feedstrom (5) nach 1. Rückführung | 2, 91 | 16,37 | 80,72 | 20,07 |
| Erster Permeatstrom (6) | 22,9 | 18,51 | 58,59 | 2,31 |
| Erster Retentatstrom (7) | 1,78 | 16,25 | 81, 97 | 20,07 |
| Zweiter Retentatstrom (8) | 0,01 | 16,13 | 83,86 | 20,00 |
| Zweiter Permeatstrom (9) | 26,67 | 17,9 | 55,43 | 0,28 |
| Dritter Retentatstrom (10) | 18,18 | 19,38 | 62,44 | 2,3 |
| Dritter Permeatstrom (11) = He-Produktstrom | 69,9 | 9,8 | 20,3 | 1 |

Aus einem vergleichbaren Rohgasgemisch wird im nächstliegenden Stand der Technik, nämlich der US 2005/0217479, Beispiel 4, nur eine Heliumkonzentration von 10 Vol. % erzielt. Die Helium-Ausbeute beträgt 62%. Dies bestätigt den signifikaten technischen Fortschritt, der durch das erfindungsgemäße Verfahren erzielt wurde.

### Erfindungsgemäßes Beispiel 2: Herstellung von Helium mit hoher Reinheit

### 2a) Als Rohgasstrom wird in einem Mischer eine Mischung aus

3 Vol% He
16,1 Vol. % N₂
80,9 Vol. % CH₄
hergestellt.

Die Summe der rückgeführten Stoffströme (9) und (10) betrug 14 Vol.- %. Der Feeddruck betrug 20 bar(a). Die Heliumausbeute bezogen auf die eingesetzte Heliummenge betrug > 95 Gew.%. Weitere Zusammensetzungen und Drücke der erhaltenen Gasströme finden sich in nachfolgender Tabelle 2.

**Tabelle 2:**

| | He [Vol.%] | N₂ [Vol.%] | CH₄ [Vol.%] | Druck p [bar(a)] |
|---|---|---|---|---|
| Feedstrom (5) nach 1. Rückführung | 7,03 | 16,07 | 76,9 | 20,08 |
| Erster Permeatstrom (6) | 49,72 | 12,46 | 37,82 | 2,32 |
| Erster Retentatstrom (7) | 3,53 | 16,37 | 80,1 | 20,08 |
| Zweiter Retentatstrom (8) | 0,03 | 16,56 | 83,41 | 20,00 |
| Zweiter Permeatstrom (9) | 43,23 | 14,19 | 42,58 | 0,28 |
| Dritter Retentatstrom (10) | 24,14 | 18,53 | 57,33 | 2,3 |
| Dritter Permeatstrom (11) = He-Produktstrom | 94, 96 | 1,73 | 3,31 | 1 |

### 2b) Als Rohgasstrom wird in einem Mischer eine Mischung aus

6 Vol% He
16,1 Vol. % N₂
77,9 Vol. % CH₄
hergestellt.

Die Summe der rückgeführten Stoffströme (9) und (10) betrug 15 Vol.- %. Der Feeddruck betrug 20 bar(a). Die Heliumausbeute betrug > 97 Gew.%. Weitere Zusammensetzungen und Drücke der erhaltenen Gasströme finden sich in nachfolgender Tabelle 3.

**Tabelle 3:**

| | He [Vol.%] | N₂ [Vol.%] | CH₄ [Vol.%] | Druck p [bar (a)] |
|---|---|---|---|---|
| Feedstrom (5) nach 1. Rückführung | 10,26 | 16,04 | 73,7 | 20,08 |
| Erster Permeatstrom (6) | 63,14 | 9,44 | 27,42 | 2,32 |
| Erster Retentatstrom (7) | 4,15 | 16,80 | 79,05 | 20,08 |
| Zweiter Retentatstrom (8) | 0,03 | 17,09 | 82,88 | 20,00 |
| Zweiter Permeatstrom (9) | 46,47 | 13,77 | 39,76 | 0,28 |
| Dritter Retentatstrom (10) | 26, 69 | 18,53 | 54,78 | 2,3 |
| Dritter Permeatstrom (11) = He-Produktstrom | 97,62 | 0,85 | 1,53 | 1 |

Diese Beispiele zeigen, dass mit dem erfindungemäßen Verfahren Helium mit hoher Reinheit gewonnen werden kann ohne Roh-Helium als Zwischenprodukt zu erstellen und somit 2 Schritte der Klassischen Helium Aufbereitung ersetzt werden können.

### Erfindungsgemäßes Beispiel 3: Herstellung von Helium mit hoher Reinheit aus einem He/N₂ Gasstrom

In einem Mischer wird eine Mischung aus
2,7% Vol% He
97,3 Vol. % N₂
hergestellt.

Die Summe der rückgeführten Stoffströme (9) und (10) betrug 20 Vol.- %. Der Feeddruck betrug 16 bar(a). Es wurde ein Produktstrom (11) (1 bar(a)) mit > 90% Heliumgehalt und ein Retentatstrom (8) (16 bar(a)) mit einem Heliumgehalt von 0,04 Vol. % erhalten.

Die Heliumausbeute betrug > 99,5 Gew.%. Dies zeigt, dass mit dem erfindungsgemäßen Verfahren in einem Prozessschritt und in hohen Ausbeuten ein bereits hoch aufgereinigter Heliumstrom und gleichzeitig ein hochreiner Retentatstrom erhalten werden kann.

Aus einem vergleichbaren Rohgasgemisch wird im nächstliegenden Stand der Technik, nämlich der US 2005/0217479 , Beispiel 3, nur eine Heliumkonzentration von 28 Vol. % erzielt. Die Helium-Ausbeute beträgt 75%. Im Retentatstrom befinden sich noch 0,7 Vol. % Helium. Dies bestätigt erneut den signifikanten technischen Fortschritt, der durch das erfindungsgemäße Verfahren erzielt wurde. Mit dem erfindungsgemäßen Verfahren kann nicht nur ein bereits hoch angereicherter Heliumstrom erzeugt werden, gleichzeitig erhält man auch einen höchst reinen N₂-Strom und somit gleichzeitig zwei verwertbare Produkte.

### Abbildungsverzeichnis:

- **Abb.1:**: Beispielhafte Verschaltung von mehreren Membranmodulen laut Erfindung
- **Abb.2:**: 3-Stufige Verschaltung von Membranmodulen mit einem Kompressor und Retentatrückführung der Permeattrennstufe (3) ohne totale Entspannung in eine erhöhte Kompressionsstufe des Kompressors (4)
- **Abb.3:**: 3-Stufige Verschaltung von Membranmodulen mit einem Kompressor und Retentatrückführung der dritten Stufe ohne totale Entspannung sowie Permeatrückführung der zweiten Stufe in eine erhöhte Kompressionsstufe des Kompressors (4)

### Bezugszeichenliste:

1: Feedstromtrennstufe
2: Retentattrennstufe
3: Permeattrennstufe
4: einstufiger oder mehrstufiger Kompressor
5: Feedstrom
6: erster Permeatstrom
7: erster Retentatstrom
8: zweiter Retentatstrom
9: zweiter Permeatstrom
10: dritter Retentatstrom
11: dritter Permeatstrom
12: Optionales Druckminderventil im ersten Retentatstrom 7
13: Optionales Druckminderventil im zweiten Retentatstrom 8
14: Optionales Druckminderventil im dritten Retentatstrom 10
15: Vakuumpumpe (in den Abbildungen nicht wiedergegeben)
16: Mischkammer (in den Abbildungen nicht wiedergegeben)
17: Rohgasstrom

## Patentansprüche

1. Verfahren zur Trennung von Helium enthaltenden Gasen, **dadurch gekennzeichnet,**
**dass** es in einer Vorrichtung durchgeführt wird, welche eine Feedstromtrennstufe (1), eine Retentattrennstufe (2) und eine Permeattrennstufe (3) aufweist, sowie zumindest einen Kompressor (4) und/oder zumindest eine, bevorzugt eine oder zwei, Vakuumpumpe(n) (15),
**dass** die Feedstromtrennstufe (1) einen Feedstrom (5), bestehend aus Helium und mindestens einer weiteren Komponente, in einen ersten, im Vergleich zum Feedstrom (5) bezüglich Helium angereicherten, Permeatstrom (6) und einen ersten, im Vergleich zum Feedstrom (5) bezüglich Helium abgereicherten, Retentatstrom (7) auftrennt,
**dass** die Retentattrennstufe (2) den ersten Retentatstrom (7) in einen zweiten, im Vergleich zum ersten Retentatstrom (7) bezüglich Helium angereicherten Permeatstrom (9), und einen zweiten, im Vergleich zum ersten Retentatstrom (7) bezüglich Helium abgereicherten, Retentatstrom (8), auftrennt
**dass** die Permeattrennstufe (3) den ersten Permeatstrom (6), in einen dritten, im Vergleich zum ersten Permeatstrom (6) bezüglich Helium abgereicherten, Retentatstrom (10), und einen dritten, im Vergleich zum ersten Permeatstrom (6) bezüglich Helium angereicherten Permeatstrom (11), auftrennt,
**dass** der dritte Permeatstrom (11) als Produkt entnommen oder weiterverarbeitet und gegebenenfalls der zweite Retentatstrom (8) als erstes weiteres Produkt entnommen oder weiterverarbeitet oder verworfen werden,
**dass** der zweite Permeatstrom (9) und der dritte Retentatstrom (10) in den Feedstrom (5) zugeführt werden,
**dass** der erste Permeatstrom (6) keiner Rekompression unterworfen wird
**dass** die Regelung des mit dem zweiten Permeatstrom (9) und dem dritten Retentatstrom (10) in den Feedstrom (5) zurückgeführten Gasvolumens derart eingestellt wird, dass in Summe weniger als 50 Vol. %, bevorzugt 5 bis 40 Vol. %, ganz besonders bevorzugt 5 bis 30 Vol. % und speziell bevorzugt 10 bis 25 Vol. %, des Volumens des Rohgasstroms (17) zurückgeführt werden,
und
**dass** die Helium Konzentration nach erstmaliger Rückführung des zweiten Permeatstroms (9) und des dritten Retentatstroms (10), im Feedstrom (5) erhöht wird, bevorzugt um mindestens 2%, besonders bevorzugt um mindestens 3% besonders bevorzugt um 4 bis 10% und ganz besonders bevorzugt um 5 bis 10%, jeweils im Vergleich zur Konzentration im Rohgasstrom (17)
und
**dass** die Konzentration von Helium im dritten Permeatstrom (11) größer als 50 Vol.% beträgt.

2. Verfahren nach Anspruch 1,
**dadurch gekennzeichnet, dass** zumindest in der Feedstromtrennstufe (1), bevorzugt jedoch in der Feedstromtrennstufe (1), der Retentattrennstufe (2) und der Permeattrennstufe (3), Gasseparationsmembranmodule mit einer Gemischtgasselektivität, bestimmt als Quotient der Permeanzen bei 23°C für eine Mischung von jeweils 50% der Einzelgase, für Helium/Methan oder für Helium/Stickstoff von mindestens 40, bevorzugt 50 bis 400, besonders bevorzugt 150 bis 300 verwendet werden.

3. Verfahren nach Anspruch 2,
**dadurch gekennzeichnet,**
**dass** als Material für die trennaktive Schicht der Membranen ein Polyimid der allgemeinen Formel 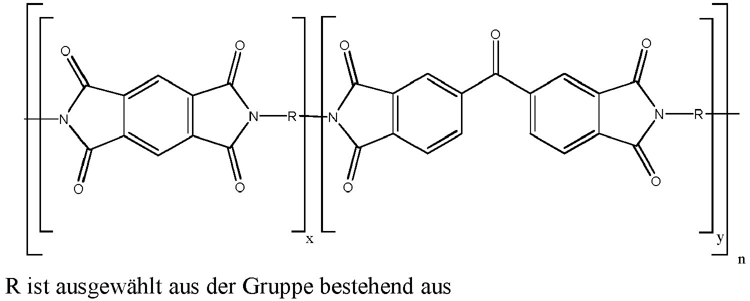 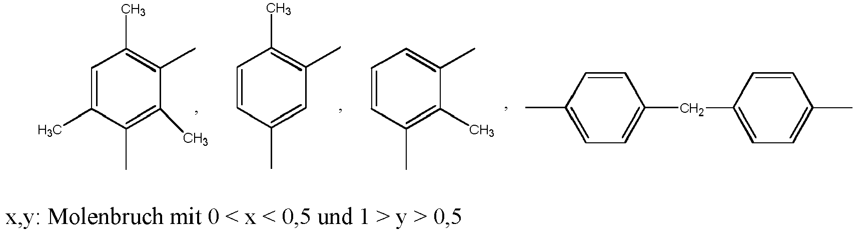 verwendet wird.

4. Verfahren nach Anspruch 3,
**dadurch gekennzeichnet,**
**dass** als Material für die trennaktive Schicht der Membranen ein Polyimid umfassend 10 bis 90 Gew. %, bevorzugt 15 bis 25 Gew.% und ganz besonders bevorzugt 20 Gew. % 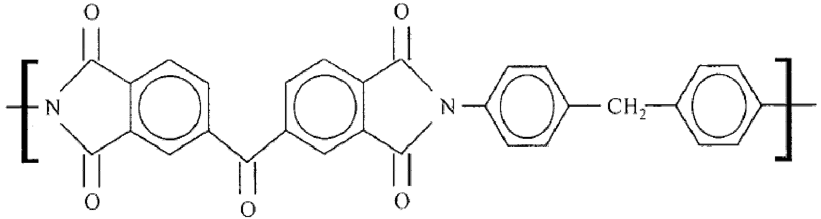 sowie 90 bis 10 Gew. %, bevorzugt 85 bis 75 Gew.% und ganz besonders bevorzugt 80 Gew. % 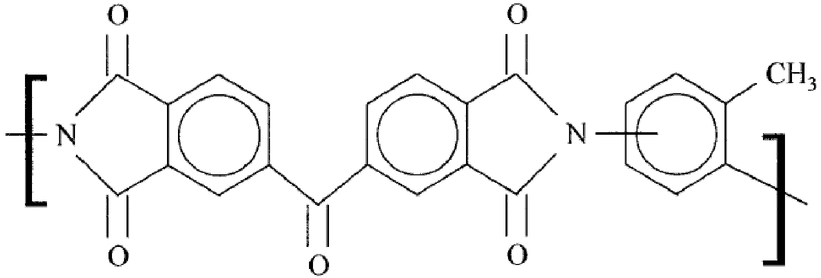 verwendet wird.

5. Verfahren nach einem der vorherigen Ansprüche,
**dadurch gekennzeichnet,**
**dass** der zweite Permeatstrom (9) und der dritte Retentatstrom (10) auf der Saugseite des Kompressors (4) zur Wideraufbereitung geleitet werden.

6. Verfahren nach einem der vorherigen Ansprüche,
**dadurch gekennzeichnet,**
**dass** ein mehrstufiger Kompressor (4) verwendet wird.

7. Verfahren nach Anspruch 6,
**dadurch gekennzeichnet,**
**dass** der zweite Permeatstrom (9) und /oder der dritte Retentatstrom (10) zwischen zwei Verdichtungsstufen in den Kompressor (4) eingeführt wird/werden.

8. Verfahren nach einem der vorherigen Ansprüche,
**dadurch gekennzeichnet,**
**dass** der erste Retentatstrom (7) und/oder der zweite Retentatstrom (8) und/oder der dritte Retentatstrom (10) durch ein Druckminderventil geleitet werden.

9. Verfahren nach einem der vorherigen Ansprüche,
**dadurch gekennzeichnet,**
**dass** mindestens eine der Membrantrennstufen (1) bis (3) mehr als ein Gasseparationsmembranmodul umfasst, welche parallel und/oder seriell verschaltet sind.

10. Verfahren nach einem der vorherigen Ansprüche,
**dadurch gekennzeichnet,**
**dass** das/die Gasseparationsmembranmodul(e) aus Hohlfasermembranen und/oder Flachmembranen bestehen.

11. Verfahren nach einem der vorherigen Ansprüche,
**dadurch gekennzeichnet,**
**dass** mindestens 95%, bevorzugt mindestens 97%, besonders bevorzugt mindestens 99% und ganz besonders bevorzugt mindestens 99,5 %, des mit dem Rohgasstroms (17)in die Vorrichtung eingeführten Heliums über den dritten Permeatstrom (11) ausgeschleust werden.

12. Verfahren nach einem der vorherigen Ansprüche,
**dadurch gekennzeichnet,**
**dass** der Druck der Permeatseite (6) der Feedstromtrennstufe (1) bevorzugt mittels eines Druckminderventils (14) auf der Retentatseite der Permeattrennstufe (3) auf 1 bis 30 bar, vorzugsweise auf 2 bis 20 bar und besonders vorzugsweise auf 2 bis 10 bar eingestellt wird.

13. Verfahren nach einem der vorherigen Ansprüche,
**dadurch gekennzeichnet,**
**dass** der Druck des ersten und zweiten Retentatstroms (7) und (8) bevorzugt mittels eines Druckminderventils (13) im zweiten Retentatstrom (8), auf 1 bis 100 bar, vorzugsweise auf 5 bis 80 bar und besonders vorzugsweise auf 10 bis 70 bar eingestellt wird.

14. Verfahren nach einem der vorherigen Ansprüche,
**dadurch gekennzeichnet,**
**dass** als Triebkraft für die Trennaufgabe eine Partialdruckdifferenz zwischen der Retentat- und der Permeatseite in den jeweiligen Membrantrennstufen zum Einsatz kommt, wobei die Partialdruckdifferenz durch einen Kompressor im Feedstrom (5) und/ oder durch eine Vakuumpumpe (15) im zweiten und/oder dritten Permeatstrom (9) und / oder (11) und/oder durch einen permeatseitigen Spülgasstrom erzeugt wird.

15. Verfahren nach einem der Ansprüche 13 oder 14,
**dadurch gekennzeichnet,**
**dass** der Druck des Permeats der Feedstromtrennstufe (1) gleich oder erhöht ist gegenüber dem Umgebungsdruck, sodass noch eine Partialdruckdifferenz zwischen Retentat und Permeat der Permeattrennstufe (3) besteht und damit eine treibende Kraft gegeben ist für den Fall, dass das Permeat der Permeattrennstufe (3) auf Umgebungsdruck ist oder Unterdruck angelegt wird.

## Claims

1. Method for separating gases containing helium, **characterized in that** it is carried out in an apparatus which has a feed stream separation stage (1), a retentate separation stage (2) and a permeate separation stage (3), as well as at least one compressor (4) and/or at least one, preferably one or two, vacuum pump(s) (15),
the feed stream separation stage (1) separates a feed stream (5) consisting of helium and at least one other component into a first permeate stream (6) enriched with regard to helium compared to the feed stream (5), and a first retentate stream (7) depleted with regard to helium compared to the feed stream (5),
the retentate separation stage (2) separates the first retentate stream (7) into a second permeate stream (9) enriched with regard to helium compared to the first retentate stream (7), and a second retentate stream (8) depleted with regard to helium compared to the first retentate stream (7),
the permeate separation stage (3) separates the first permeate stream (6) into a third retentate stream (10) depleted with regard to helium compared to the first permeate stream (6), and a third permeate stream (11) enriched with regard to helium compared to the first permeate stream (6),
the third permeate stream (11) is removed as product or processed further and optionally the second retentate stream (8) is removed as a first further product or processed further or discarded,
the second permeate stream (9) and the third retentate stream (10) are fed to the feed stream (5),
the first permeate stream (6) is not subjected to a recompression,
the control of the gas volume recycled with the second permeate stream (9) and the third retentate stream (10) to the feed stream (5) is adjusted such that, in total, less than 50% by volume, preferably 5 to 40% by volume, very particularly preferably 5 to 30% by volume and especially preferably 10 to 25% by volume, of the volume of the crude gas stream (17) are recycled, and
the helium concentration after the first recycling of the second permeate stream (9) and of the third retentate stream (10) in the feed stream (5) is increased, preferably by at least 2%, particularly preferably by at least 3%, particularly preferably by 4 to 10% and very particularly preferably by 5 to 10%, in each case compared to the concentration in the crude gas stream (17),
and
the concentration of helium in the third permeate stream (11) is greater than 50% by volume.

2. Method according to Claim 1,
**characterized in that**, at least in the feed stream separation stage (1), but preferably in the feed stream separation stage (1), the retentate separation stage (2) and the permeate separation stage (3), gas separation membrane modules with a mixed-gas selectivity, determined as quotient of the permeances at 23°C for a mixture of 50% of the individual gases in each case, for helium/methane or for helium/nitrogen of at least 40, preferably 50 to 400, particularly preferably 150 to 300, are used.

3. Method according to Claim 2,
**characterized in that**
the material used for the separation-active layer of the membranes is a polyimide of the general formula 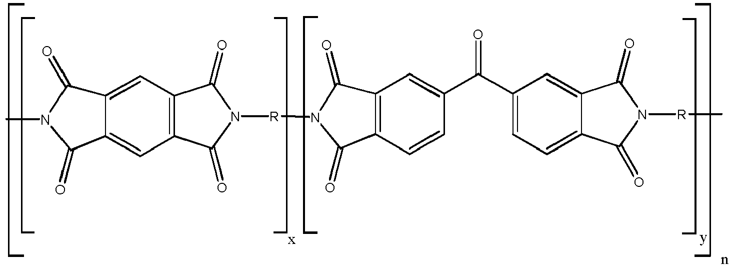
R is selected from the group consisting of 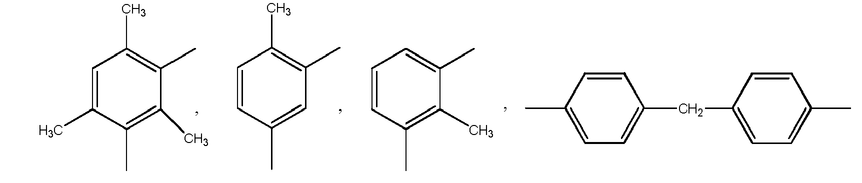
x, y: mole fraction where 0 < x < 0.5 and 1 > y > 0.5.

4. Method according to Claim 3,
**characterized in that**
the material used for the separation-active layer of the membranes is a polyimide comprising 10 to 90% by weight, preferably 15 to 25% by weight and very particularly preferably 20% by weight of 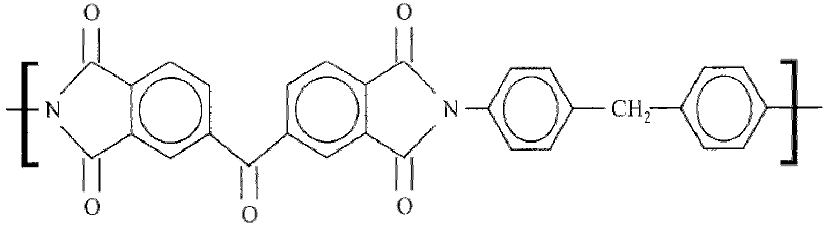 and 90 to 10% by weight, preferably 85 to 75% by weight and very particularly preferably 80% by weight of

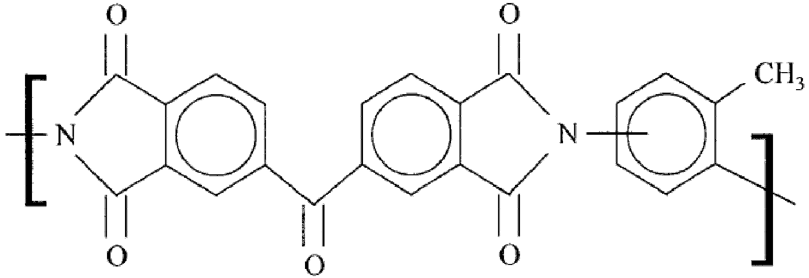

5. Method according to one of the preceding claims,
**characterized in that**
the second permeate stream (9) and the third retentate stream (10) on the suction side of the compressor (4) are passed for reprocessing.

6. Method according to one of the preceding claims,
**characterized in that**
a multistage compressor (4) is used.

7. Method according to Claim 6,
**characterized in that**
the second permeate stream (9) and/or the third retentate stream (10) is/are introduced into the compressor (4) between two compression stages.

8. Method according to one of the preceding claims,
**characterized in that**
the first retentate stream (7) and/or the second retentate stream (8) and/or the third retentate stream (10) are passed through a pressure relief valve.

9. Method according to one of the preceding claims,
**characterized in that**
at least one of the membrane separation stages (1) to (3) comprises more than one gas separation membrane module which are connected in parallel and/or in series.

10. Method according to one of the preceding claims,
**characterized in that**
the gas separation membrane module(s) consist(s) of hollow fibre membranes and/or flat membranes.

11. Method according to one of the preceding claims,
**characterized in that**
at least 95%, preferably at least 97%, particularly preferably at least 99% and very particularly preferably at least 99.5%, of the helium introduced into the apparatus with the crude gas stream (17) are removed from the system via the third permeate stream (11).

12. Method according to one of the preceding claims,
**characterized in that**
the pressure of the permeate side (6) of the feed stream separation stage (1) is adjusted, preferably with a pressure relief valve (14) on the retentate side of the permeate separation stage (3), to 1 to 30 bar, preferably to 2 to 20 bar and particularly preferably to 2 to 10 bar.

13. Method according to one of the preceding claims,
**characterized in that**
the pressure of the first and second retentate stream (7) and (8) is adjusted, preferably with a pressure relief valve (13) in the second retentate stream (8), to 1 to 100 bar, preferably to 5 to 80 bar and particularly preferably to 10 to 70 bar.

14. Method according to one of the preceding claims,
**characterized in that**
the driving force used for the separation task is a partial pressure difference between the retentate side and the permeate side in the respective membrane separation stages, the partial pressure difference being generated by a compressor in the feed stream (5) and/or by a vacuum pump (15) in the second and/or third permeate stream (9) and/or (11) and/or by a permeate-side flushing-gas stream.

15. Method according to one of Claims 13 and 14,
**characterized in that**
the pressure of the permeate of the feed stream separation stage (1) is identical or increased compared with the ambient pressure, meaning that there is still a partial pressure difference between retentate and permeate of the permeate separation stage (3) and therefore a driving force is present for the case when the permeate of the permeate separation stage (3) is at ambient pressure or subatmospheric pressure is applied.

## Revendications

1. Procédé de séparation de gaz contenant de l'hélium, **caractérisé**
**en ce qu'**il est réalisé dans un dispositif qui comprend une étape de séparation de courant d'alimentation (1), une étape de séparation de rétentat (2) et une étape de séparation de perméat (3), ainsi qu'au moins un compresseur (4) et/ou au moins une, de préférence une ou deux, pompes à vide (15),
**en ce que** l'étape de séparation de courant d'alimentation (1) sépare un courant d'alimentation (5), constitué par de l'hélium et au moins un composant supplémentaire, en un premier courant de perméat (6), enrichi en hélium en comparaison du courant d'alimentation (5), et un premier courant de rétentat (7) appauvri en hélium en comparaison du courant d'alimentation (5),
**en ce que** l'étape de séparation de rétentat (2) sépare le premier courant de rétentat (7) en un deuxième courant de perméat (9) enrichi en hélium en comparaison du premier courant de rétentat (7), et un deuxième courant de rétentat (8), appauvri en hélium en comparaison du premier courant de rétentat (7),
**en ce que** l'étape de séparation de perméat (3) sépare le premier courant de perméat (6) en un troisième courant de rétentat (10) appauvri en hélium en comparaison du premier courant de perméat (6), et un troisième courant de perméat (11), enrichi en hélium en comparaison du premier courant de perméat (6),
**en ce que** le troisième courant de perméat (11) est soutiré en tant que produit ou transformé et le deuxième courant de rétentat (8) est éventuellement soutiré en tant que premier produit supplémentaire ou transformé ou mis au rebut,
**en ce que** le deuxième courant de perméat (9) et le troisième courant de rétentat (10) sont introduits dans le courant d'alimentation (5),
**en ce que** le premier courant de perméat (6) n'est pas soumis à une recompression,
**en ce que** la régulation du volume gazeux recyclé dans le courant d'alimentation (5) avec le deuxième courant de perméat (9) et le troisième courant de rétentat (10) est ajusté de telle sorte qu'au total moins de 50 % en volume, de préférence 5 à 40 % en volume, de manière tout particulièrement préférée 5 à 30 % en volume et de manière spécialement préférée 10 à 25 % en volume, du volume du courant gazeux brut (17) soit recyclé,
et
**en ce que** la concentration d'hélium après un premier recyclage du deuxième courant de perméat (9) et du troisième courant de rétentat (10) dans le courant d'alimentation (5) est augmentée, de préférence d'au moins 2 %, de manière particulièrement préférée d'au moins 3 %, de manière particulièrement préférée de 4 à 10 % et de manière tout particulièrement préférée de 5 à 10 %, à chaque fois en comparaison de la concentration dans le courant gazeux brut (17),
et
**en ce que** la concentration d'hélium dans le troisième courant de perméat (11) est supérieure à 50 % en volume.

2. Procédé selon la revendication 1, **caractérisé en ce qu'**au moins dans l'étape de séparation de courant d'alimentation (1), de préférence toutefois dans l'étape de séparation de courant d'alimentation (1), l'étape de séparation de rétentat (2) et l'étape de séparation de perméat (3), des modules membranaires de séparation de gaz ayant une sélectivité pour un gaz mixte, déterminée en tant que quotient des perméats à 23 °C pour un mélange de respectivement 50 % des gaz individuels, pour l'hélium/méthane ou pour l'hélium/azote d'au moins 40, de préférence de 50 à 400, de manière particulièrement préférée de 150 à 300, sont utilisés.

3. Procédé selon la revendication 2, **caractérisé en ce que** le matériau utilisé pour la couche de séparation active des membranes est un polyimide de la formule générale : 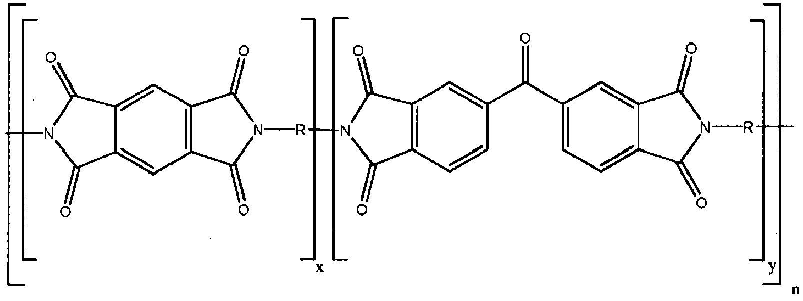
R étant choisi dans le groupe constitué par : 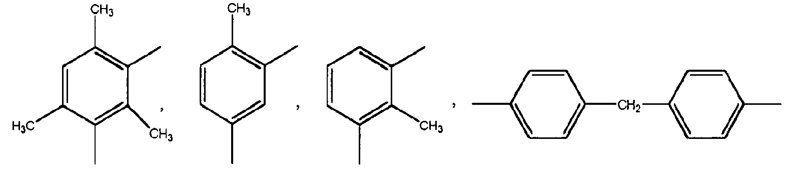
x, y : fraction molaire avec 0 < x < 0,5 et 1 > y > 0,5.

4. Procédé selon la revendication 3, **caractérisé en ce que** le matériau utilisé pour la couche de séparation active des membranes est un polyimide comprenant 10 à 90 % en poids, de préférence 15 à 25 % en poids et de manière tout particulièrement préférée 20 % en poids de 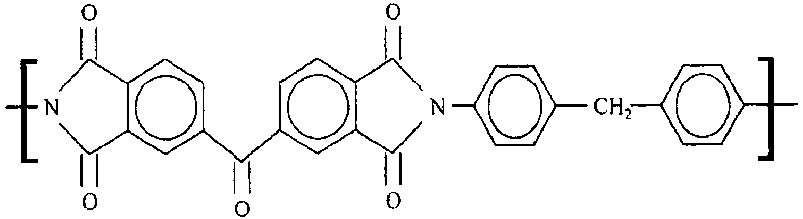 ainsi que 90 à 10 % en poids, de préférence 85 à 75 % en poids et de manière tout particulièrement préférée 80 % en poids de

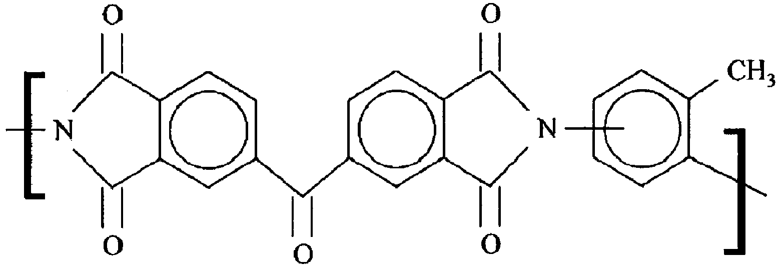

5. Procédé selon l'une quelconque des revendications précédentes, **caractérisé en ce que** le deuxième courant de perméat (9) et le troisième courant de rétentat (10) sont introduits sur le côté d'aspiration du compresseur (4) pour le retraitement.

6. Procédé selon l'une quelconque des revendications précédentes, **caractérisé en ce qu'**un compresseur à plusieurs étapes (4) est utilisé.

7. Procédé selon la revendication 6, **caractérisé en ce que** le deuxième courant de perméat (9) et/ou le troisième courant de rétentat (10) sont introduits entre deux étages de compression dans le compresseur (4) .

8. Procédé selon l'une quelconque des revendications précédentes, **caractérisé en ce que** la premier courant de rétentat (7) et/ou le deuxième courant de rétentat (8) et/ou le troisième courant de rétentat (10) sont acheminés au travers d'une soupape de réduction de pression.

9. Procédé selon l'une quelconque des revendications précédentes, **caractérisé en ce qu'**au moins une des étapes de séparation membranaire (1) à (3) comprend plus d'un module membranaire de séparation de gaz, qui sont raccordés en parallèle et/ou en série.

10. Procédé selon l'une quelconque des revendications précédentes, **caractérisé en ce que** le ou les modules membranaires de séparation de gaz sont constitués par des membranes fibres creuses et/ou des membranes plates.

11. Procédé selon l'une quelconque des revendications précédentes, **caractérisé en ce qu'**au moins 95 %, de préférence au moins 97 %, de manière particulièrement préférée au moins 99 % et de manière tout particulièrement préférée au moins 99,5 % de l'hélium introduit dans le dispositif avec le courant gazeux brut (17) est évacué par le troisième courant de perméat (11).

12. Procédé selon l'une quelconque des revendications précédentes, **caractérisé en ce que** la pression du côté du perméat (6) de l'étape de séparation de courant d'alimentation (1) est ajustée, de préférence au moyen d'une soupape de réduction de pression (14) sur le côté du rétentat de l'étape de séparation de perméat (3), à 1 à 30 bar, de préférence à 2 à 20 bar et de manière particulièrement préférée à 2 à 10 bar.

13. Procédé selon l'une quelconque des revendications précédentes, **caractérisé en ce que** la pression du premier et deuxième courant de rétentat (7) et (8) est ajustée, de préférence au moyen d'une soupape de réduction de pression (13) dans le deuxième courant de rétentat (8), à 1 à 100 bar, de préférence à 5 à 80 bar, et de manière particulièrement préférée à 10 à 70 bar.

14. Procédé selon l'une quelconque des revendications précédentes, **caractérisé en ce qu'**une différence de pression partielle entre le côté du rétentat et du perméat dans les étapes de séparation membranaire respectives est utilisée en tant que force d'entraînement pour la séparation, la différence de pression partielle étant générée par un compresseur dans le courant d'alimentation (5) et/ou par une pompe à vide (15) dans le deuxième et/ou troisième courant de perméat (9) et/ou (11) et/ou par un courant de gaz de rinçage du côté du perméat.

15. Procédé selon l'une quelconque des revendications 13 ou 14, **caractérisé en ce que** la pression du perméat de l'étape de séparation de courant d'alimentation (1) est égale ou supérieure à la pression ambiante, de telle sorte qu'une différence de pression partielle existe encore entre le rétentat et le perméat de l'étape de séparation de perméat (3), et qu'une force motrice soit ainsi présente, dans le cas où le perméat de l'étape de séparation de perméat (3) se trouve à la pression ambiante ou une sous-pression est appliquée.
